# EUROPÄISCHE PATENTSCHRIFT

(11) **EP 1 500 917 B1**
(45) Veröffentlichungstag und Bekanntmachung des Hinweises auf die Patenterteilung: **24.02.2010**
(21) Anmeldenummer: 04008466.7
(22) Anmeldetag: 07.04.2004
(51) Int. Cl.: G01M 17/02, G01B 11/24, G01B 11/25, G01B 11/08

(54) **Verfahren und Vorrichtung zum Prüfen von Reifen**
Procedure and device for testing tyres
Procédé et dispositif d'essai de pneus

(30) Priorität: 24.07.2003 DE 10333802
(43) Veröffentlichungstag der Anmeldung: 26.01.2005
(73) Patentinhaber: Steinbichler Optotechnik GmbH, 83115 Neubeuern (DE)
(72) Erfinder: Steinbichler, Hans, Dr., 83115 Neubeuern (DE); Wilhelm, Robert, 83126 Flintsbach (DE); Leitner, Bernd, 83115 Neubeuern (DE); Berger, Roman, 83530 Schnaitsee (DE); Rasenberger, Volker, 83064 Raubling (DE); Huber, Rainer, 83451 Piding (DE)
(74) Vertreter: Zinnecker, Armin

(56) Entgegenhaltungen:
- EP-A- 1 043 578
- EP-A- 1 099 947
- EP-A1- 1 284 409
- US-A- 6 006 599
- JOURNAL ARTICLE: 'Circle of Success' RETREADING BUSINESS Nr. 13, 01 Januar 2000, Seiten 1 - 13, XP007907813

## Beschreibung

Die Erfindung betrifft ein Verfahren zum Prüfen von Reifen und eine Vorrichtung zur Durchführung eines derartigen Verfahrens.

Prüfgeräte für Reifen sind bereits bekannt. Dabei kann die Oberfläche des Reifens auf Fehlstellen untersucht werden. Dies kann insbesondere durch die Bestrahlung mit kohärentem Licht, insbesondere Laserlicht, geschehen.

Aus der EP-A-1 043 578 ist ein optisches Prüfgerät für Reifen mit mehreren Meßköpfen zur Prüfung der Oberfläche des Reifens bekannt. Das Prüfgerät umfaßt eine Einrichtung zur Erfassung der Größe und/oder Position des Reifens und eine Steuervorrichtung, die den Meßkopf entsprechend der erfaßten Größe und/oder Position des Reifens positioniert. Ferner ist ein Bildverarbeitungssystem vorhanden.

Aus der EP-A-1 099 947 ist ein optisches Prüfgerät für Reifen bekannt, bei dem die Drehung des Reifens und die Manipulation der Kamera unter Verwendung einer Datenbank programmiert werden können.

Die US-A-6 006 599 offenbart ein Reifenprüfgerät mit einem Computer, der einen Speicher aufweist, in dem Größendaten des Reifens gespeichert sind, die für die schrittweise Umdrehung des Reifens in Abhängigkeit von der Größe des Reifens erforderlich sind.

Aus der EP-A-1 284 409 ist ein Prüfgerät für Reifen bekannt, das ein Konturmeßsystem umfaßt, dessen Daten zur vollautomatischen Positionierung des Meßkopfes dienen können.

Die Literaturstelle XP007907813 RETREADING BUSINESS Nr. 13 2000/2 offenbart ein Reifenprüfgerät, bei dem der Außendurchmesser und die Breite des Reifens bestimmt und für die Positionierung der Meßköpfe verwendet werden können.

Aufgabe der Erfindung ist es, ein Verfahren und eine Vorrichtung der eingangs angegebenen Art zu verbessern.

Bei einem Verfahren der eingangs angegebenen Art wird diese Aufgabe durch die Merkmale des Anspruchs 1 gelöst. Das Verfahren zum Prüfen von Reifen wird mittels eines Prüfsystems durchgeführt, wobei das Prüfsystem einen Speicher, in dem Geometriedaten des Reifens gespeichert sind, und mindestens einen Messkopf zur Prüfung der Oberfläche des Reifens umfasst. Der Messkopf kann einen Sensor umfassen. Der oder die Messköpfe werden unter Berücksichtigung der Geometriedaten des Reifens zur Prüfung der Oberfläche des Reifens positioniert. Wenn die Geometriedaten des Reifens bekannt sind, also in dem Speicher des Prüfsystems abgelegt sind, ist es möglich, den oder die Messköpfe, die zur Prüfung der Oberfläche des Reifens dienen, automatisch zu positionieren. Hierdurch kann das Verfahren zum Prüfen von Reifen automatisiert werden.

Die Geometriedaten des Reifens können den Außendurchmesser des Reifens und/oder den Innendurchmesser des Reifens und/oder die Breite des Reifens umfassen. Vorzugsweise umfassen die Geometriedaten des Reifens den Außendurchmesser und den Innendurchmesser und die Breite des Reifens.

Die Geometriedaten des Reifens umfassen den Innendurchmesser der Lauffläche des Reifens.

Die Geometriedaten des Reifens können die Kontur der Seitenwand des Reifens umfassen.

Die Geometriedaten des Reifens können in den Speicher eingegeben werden, was insbesondere manuell geschehen kann. Stattdessen oder zusätzlich können die Geometriedaten des Reifens in den Speicher eingelesen werden, beispielsweise aus einer Datenbank, was insbesondere auch über das Internet geschehen kann.

Vorteilhaft ist es, wenn die Geometriedaten des Reifens stattdessen oder zusätzlich gemessen werden. Vorzugsweise werden die Geometriedaten des Reifens automatisch bzw. selbsttätig gemessen.

Die Geometriedaten des Reifens können durch einen Sensor gemessen werden. Insbesondere handelt es sich dabei um einen weggebenden Sensor. Geeignet sind insbesondere Triangulationssensoren, Laser-Triangulationssensoren oder Ultraschallsensoren, aber auch andere Sensoren bzw. weggebende Sensoren.

Eine weitere vorteilhafte Weiterbildung ist **dadurch gekennzeichnet, dass** der Sensor relativ zum Reifen bewegbar ist bzw. bewegt wird.

Vorzugsweise wird ein horizontales Profil des Reifens gemessen. Stattdessen oder zusätzlich kann allerdings auch ein vertikales Profil des Reifens gemessen werden.

Die Oberfläche des Reifens wird vorzugsweise interferometrisch geprüft. Hierfür kann ein interferometrischer Messkopf verwendet werden.

Ferner kann die Oberfläche des Reifens durch Projizieren von strukturiertem Licht geprüft werden.

Die Oberfläche des Reifens kann auch durch Photogrammetrie geprüft werden.

Vorteihaft ist es, wenn die Oberfläche des Reifens durch denselben Sensor geprüft wird, durch den die Geometriedaten des Reifens gemessen werden bzw. vorher gemessen worden sind. Das Verfahren kann dann besonders vorteilhaft durchgeführt werden, insbesondere dadurch, dass derselbe Sensor zunächst eine oder mehrere oder alle Geometriedaten des Reifens misst und anschließend die Oberfläche des Reifens prüft.

Die der Erfindung zugrundeliegende Aufgabe wird bei einer Vorrichtung zum Prüfen von Reifen, insbesondere zur Durchführung des erfindungsgemäßen Verfahrens, dadurch gelöst, dass die Vorrichtung ein Prüfsystem umfasst, welches einen Speicher zum Speichern von Geometriedaten des Reifens und mindestens einen Messkopf zur Prüfung der Oberfläche des Reifens umfasst. In dem Messkopf kann ein Sensor zur Prüfung der Oberfläche des Reifens vorhanden sein. Die Geometrie daten des Reifens umfassen den Innendurchmesser der Lauffläche des Reifens und/oder die Maulweite des Reifens.

Vorteilhafte Weiterbildungen der erfindungsgemäßen Vorrichtung sind Gegenstand der weiteren Unteransprüche.

Vorzugsweise umfasst die Vorrichtung eine Messeinrichtung zum Messen der Geometriedaten des Reifens. Die Messeinrichtung kann einen Sensor umfassen. Vorteilhaft ist es, wenn die Messeinrichtung und/oder der Sensor relativ zum Reifen bewegbar ist. Vorzugsweise ist die Messeinrichtung bzw. der Sensor derart relativ zum Reifen bewegbar, dass ein horizontales Profil des Reifens und/oder ein vertikales Profil des Reifens messbar bzw. bestimmbar sind.

Das Prüfsystem kann einen interferometrischen Messkopf umfassen.

Vorzugsweise ist der Sensor des Messkopfes derselbe Sensor wie der Sensor der Messeinrichtung. In diesem Fall umfasst die Vorrichtung zur Prüfung von Reifen einen Sensor, der zum Messen der Geometriedaten des Reifens und zur vorzugsweise anschließenden Prüfung der Oberfläche des Reifens dient.

Ausführungsbeispiele der Erfindung werden nachstehend anhand der beigefügten Zeichnung im einzelnen erläutert. In der Zeichnung zeigt
- Fig. 1: einen Querschnitt durch einen Reifen in einer schematischen Ansicht,
- Fig. 2: eine Vorrichtung zum Prüfen von Reifen mit einem zu prüfenden Reifen in einem Querschnitt,
- Fig. 3: das Funktionsprinzip eines Lichtschnittsensors in einer schematischen perspektivischen Ansicht,
- Fig. 4: einen zu prüfenden Reifen in einer Ansicht von oben und
- Fig. 5: mehrere Darstellungen eines Reifens und eines Messkopfs in verschiedenen Stellungen, jeweils im Querschnitt.

Für die vollautomatische Prüfung und auch Klassifizierung von Prüfobjekten, nämlich Reifen, ist unter anderem die Kenntnis über die Geometrie des jeweiligen Prüflings bzw. Reifens erforderlich, um den oder die Meßköpfe optimal positionieren zu können, so daß alle relevanten Bereiche erfaßt werden können und gleichzeitig Kollisionen mit dem Reifen vermieden werden können.

Um dies zu gewährleisten, wird das Verfahren zum Prüfen von Reifen mittels eines Prüfsystems durchgeführt, welches einen Speicher (in der Zeichnung nicht dargestellt), in dem Geometriedaten des Reifens 7 gespeichert sind, und einen Meßkopf 8 zur Prüfung der Oberfläche des Reifens 7 umfaßt. Der Meßkopf 8 wird unter Berücksichtigung der Geometriedaten des Reifens 7 zur Prüfung der Oberfläche des Reifens 7 positioniert.

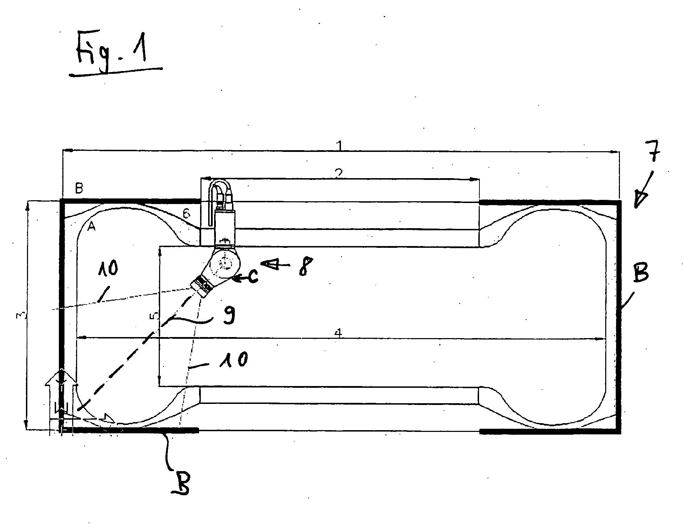

Die Geometriedaten des Reifens 7 sind aus Fig. 1 ersichtlich. Im Speicher sind der Außendurchmesser 1 des Reifens, der Innendurchmesser 2 des Reifens und die Breite 3 des Reifens 3 gespeichert. Hierdurch kann ein Modell B des Reifens 7 erstellt werden, das allerdings in den meisten Anwendungsfällen unzureichend ist.

Der Meßkopf 8 umfaßt eine Kamera C mit einer optischen Achse 9 und einem Bildwinkel 10. Abhängig von der Position der Kamera C und dem Bildwinkel 10 ergibt sich das tatsächliche Gesichtsfeld der Kamera C, also derjenige Bereich der Oberfläche des Reifens 7, der bei einer bestimmten Position und Ausrichtung der Kamera C bei der Prüfung der Oberfläche des Reifens 7 erfaßt werden kann (Gesichtsfeld einer Einzelmessung). Um aus der Position und dem Bildwinkel der Kamera C das tatsächliche Gesichtsfeld einer Einzelmessung und die Anzahl der erforderlichen Meßpositionen der Kamera, die zur Prüfung der gesamten Oberfläche des Reifens erforderlich sind, bestimmen zu können, ist in vielen Anwendungsfällen auch die Kenntnis des Innendurchmessers 4 der Lauffläche des Reifens erforderlich. Die Kenntnis des Innendurchmessers 4 der Lauffläche des Reifens ermöglicht die Bestimmung des Objektabstandes, also des Abstandes der zu prüfenden Oberfläche des Reifens zur Kamera C.

In vielen Anwendungsfällen ist die Maulweite 5 des Reifens von erheblicher Bedeutung, da sie die Zugänglichkeit der von innen zu prüfenden Oberfläche bzw. Lauffläche des Reifens maßgeblich beeinflußt. In vielen Anwendungsfällen ist die Kontur 6 der Seitenwand des Reifens 7 von erheblicher Bedeutung, insbesondere für den Kollisionsschutz, also um eine Kollision des Meßkopfes C mit dem Reifen 7 zu verhindern, und die Meßfeldbestimmung (Gesichtsfeldbestimmung) bei der Prüfung der Seitenwand des Reifens 7.

Die erwähnten Geometriedaten, also der Außendurchmesser 1, der Innendurchmesser 2, die Reifenbreite 3, der Laufflächen-Innendurchmesser 4, die Maulweite 5 und/oder die Seitenwand-Kontur 6, können manuell eingegeben und/oder eingelesen werden, insbesondere aus einer Datenbank und/oder mit Hilfe eines Barcodes. Dies ist allerdings nur dann möglich, wenn die Geometriedaten des Reifens vollständig bekannt sind, was jedoch nicht in jedem Fall gewährleistet ist.

Im allgemeinen Fall müssen einige oder alle der erwähnten Geometriedaten meßtechnisch ermittelt werden.

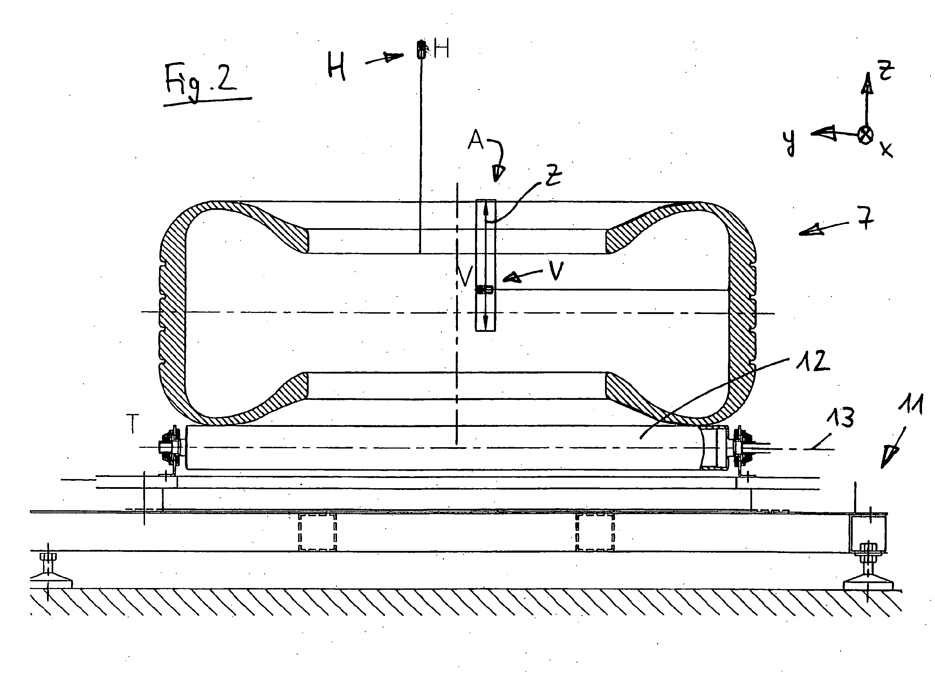

Fig. 2 zeigt eine Vorrichtung zum Prüfen von Reifen mit einem zu prüfenden Reifen 7 in einem Querschnitt. Die Vorrichtung umfasst ein Untergestell 11 mit einer Vielzahl von Rollen 12, die um horizontale, in y-Richtung verlaufende Achsen 13 drehbar gelagert sind, so dass der darauf flach aufliegende Reifen 7 in horizontaler x-Richtung beweglich ist. Die Vorrichtung umfasst einen vertikal ausgerichteten Triangulationssensor H und einen horizontal ausgerichteten Triangulationssensor V. Während der Reifen 7 in horizontaler x-Richtung verfahren wird, nimmt der vertikal ausgerichtete Triangulationssensor H ein horizontales Profil auf. Ein zweites, vertikales Profil wird dadurch erhalten, dass der horizontal ausgerichtete Triangulationssensor V mittels einer Positioniervorrichtung A in vertikaler Richtung z verfahren wird. Der Triangulationssensor H kann zusätzlich in horizontaler y-Richtung verfahrbar sein (in der Zeichnung nicht dargestellt). Die Messrichtung des Triangulationssensors H verläuft in vertikaler Richtung entgegen der z-Richtung. Die Messrichtung des Triangulationssensors V verläuft in horizontaler Richtung entgegen der y-Richtung. Durch die Triangulationsssensoren H und V können sämtliche Geometriedaten 1 - 6 gemessen werden. Die Vorrichtung kann derart ausgestaltet sein, dass diese Messungen automatisch erfolgen.

Die Fig. 2 zeigt ein Laser-Triangulationssystem. Stattdessen oder zusätzlich können die Geometriedaten 1 - 6 auch durch Ultraschallsensoren oder andere weggebende Sensoren, die mit Hilfe etwaig vorhandener Positioniersysteme der Vorrichtung relativ zum Reifen 7 bewegt werden, gemessen werden.

Die Oberfläche des Reifens 7 kann durch eine interferometrische Prüfvorrichtung geprüft werden. Die Prüfvorrichtung kann um eventuell erforderliche Zusatz-Hardware erweitert werden sowie um Auswertealgorithmen zur Koordinatenbestimmung mit derselben oder zusätzlichen Kameras. Eine Möglichkeit zur Prüfung der Oberfläche des Reifens 7 besteht im Projizieren von strukturiertem Licht auf diese Oberfläche. Durch Projizieren von beispielsweise einem oder mehreren Streifen auf die Oberfläche des Reifens mittels einer Projektionseinrichtung (z.B. Projektor, Laserdiode mit Linienoptik usw.), deren optische Achse zur Beobachtungsrichtung einen bekannten Winkel einnimmt, kann im Bild ein Muster erzeugt werden, das zur Abstandsbestimmung über Triangulationsberechnung ausgewertet werden kann.

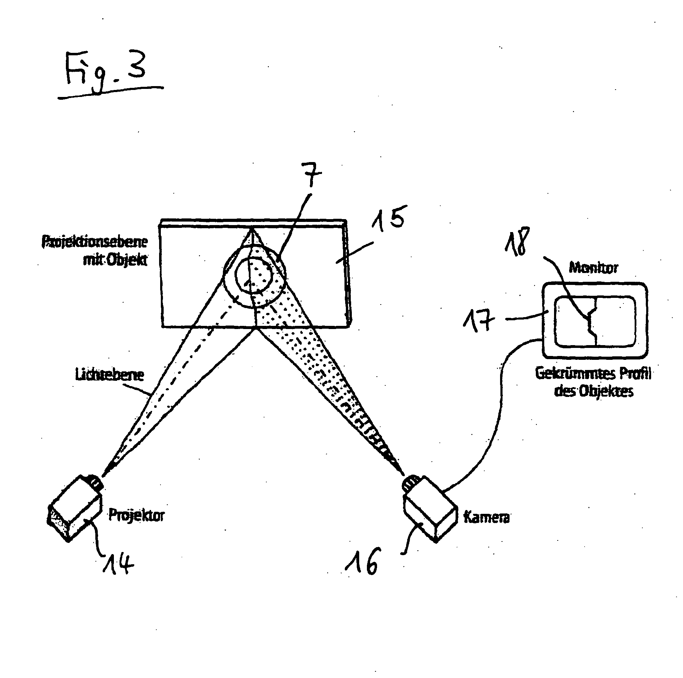

In Fig. 3 ist das Funktionsprinzip eines Lichtschnittsensors gezeigt. Durch einen Projektor 14 wird strukturiertes Licht auf die Projektionsebene 15 geworfen, in der sich der Reifen 7 befindet. Das von dort zurückgestrahlte Licht wird von einer Kamera 16 aufgenommen und auf einem Monitor 17 dargestellt. Dort ist das gekrümmte Profil 18 des Reifens 7 zu sehen.

Anstelle von Streifen kann ein beliebiges wiedererkennbares Muster (beispielsweise Gitter, Kreise, Scheiben, eventuell in unterschiedlichen Farben und/oder Intensitäten) projiziert werden. Allerdings ist die Auswerte-Software für Linien am einfachsten.

Zur Beobachtung kann eine zusätzliche Kamera verwendet werden oder aber die Kamera des interferometrischen Prüfsystems. Handelt es sich hierbei um einen Shearing-Aufbau, so werden zwei verschobene Bilder dargestellt. Dies kann durch Ausblenden eines Teilstrahls hardwaretechnisch (beispielsweise mit Hilfe eines Shutters) vermieden werden oder in der Auswertung berücksichtigt werden.

Der in Fig. 3 gezeigte Messaufbau kann sowohl für die Prüfung der Oberfläche des Reifens als auch für die Messung der Geometriedaten des Reifens verwendet werden.

Gleiches gilt für ein weiteres mögliches Messverfahren, nämlich die Photogrammetrie. Wenn man den Reifen 7 mit zwei Kameras betrachtet, deren optische Achsen einen bekannten Winkel einnehmen, kann man gleiche Orte auf der Oberfläche des Reifens anhand von per se vorhandenen Oberflächenmerkmalen des Reifens oder anhand von eigens aufgebrachten photogrammetrischen "Messmarken" in beiden Bildern identifizieren. Aus den Kamerapositionen und dem eingeschlossenen Winkel können über eine Triangulationsrechnung die Koordinaten der untersuchten Prüflinge berechnet werden. Zur Beobachtung können zwei zusätzliche Kameras eingesetzt werden oder eine zusätzliche Kamera und die Kamera des interferometrischen Prüfsystems. Handelt es sich hierbei um einen Shearing-Aufbau, werden zwei verschobene Bilder dargestellt. Dies kann durch Ausblenden eines Teilstrahls hardwaretechnisch vermieden oder in der Auswertung berücksichtigt werden.

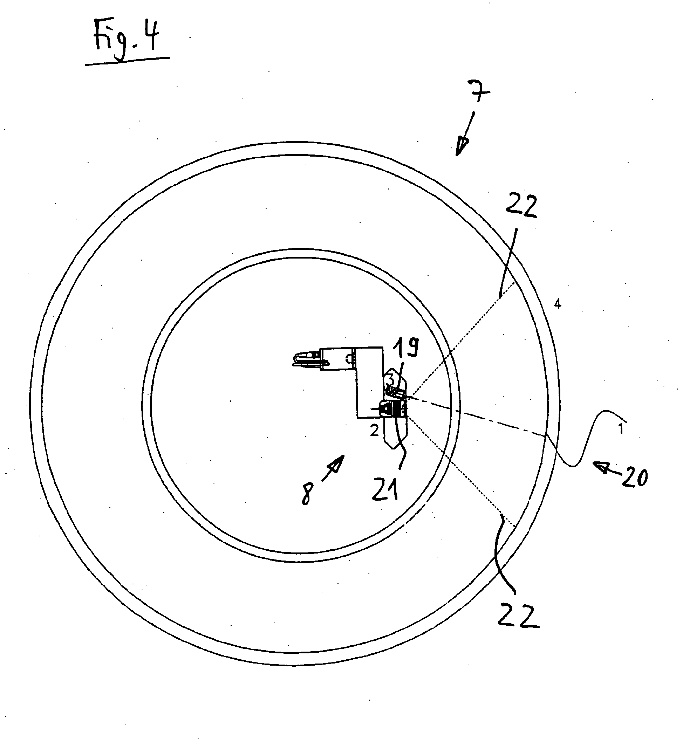

Fig. 4 zeigt einen zu prüfenden Reifen 7 in einer Ansicht von oben. Durch eine Laserdiode 19 mit Linienoptik werden eine oder mehrere Linien 20 auf die Oberfläche des Reifens 7 projiziert, die mit der Shearing-Kamera 21 unter einem Bildwinkel 22 beobachtet werden. Dabei kann in der Optik der Shearing-Kamera 21 ein Teilstrahl ausgeblendet werden. Dies ist aber nicht unbedingt erforderlich.

Die Beleuchtung durch die Laserdiode 19 und die Beobachtung durch die Shearing-Kamera 21 schließen einen Winkel ein, der es ermöglicht, durch Triangulation die Linienkoordinaten zu bestimmen. Dazu wird die Anordnung vorher, beispielsweise mit einem Stufenkörper, kalibriert.

Im Unterschied zur DE 100 09 870 C2 wird dabei nicht derselbe Bildausschnitt wie bei der interferometrischen Prüfung vermessen. Vielmehr werden innerhalb oder außerhalb des Reifens Messkopfpositionen gewählt, unter denen sich die gesuchten Geometriedaten bestimmen lassen.

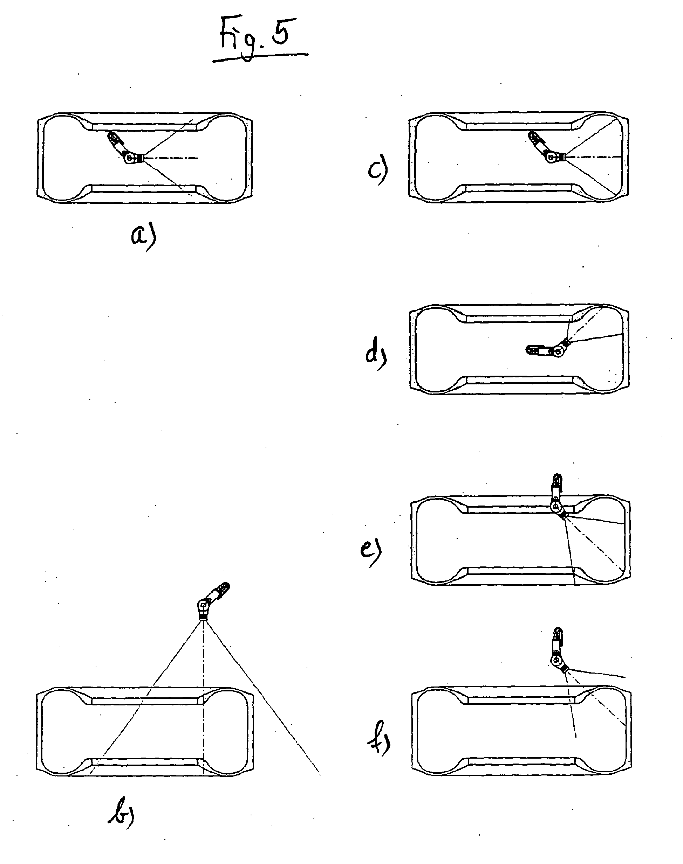

In der Fig. 5 sind auf der linken Seite die Messkopfpositionen zur Vermessung des Reifens 7 dargestellt. Auf der rechten Seite sind die Positionen zur interferometrischen Prüfung der Oberfläche des Reifens 7 dargestellt, bei denen nicht der Überblick wichtig ist, sondern die hohe Detailauflösung. Die Positionen gemäß Fig. 5a und 5b dienen also zur Messung der Geometriedaten des Reifens, die Positionen gemäß Fig. 5c, d, e und f dienen zur Prüfung der Oberfläche des Reifens.

Durch die Erfindung wird ein vollautomatisches Prüfgerät für Reifen geschaffen. Insbesondere ist es möglich, zunächst alle erforderlichen Geometriedaten des Reifens zu messen und anschließend die Oberfläche des Reifens zu prüfen. Dies kann mit ein und demselben Sensor bzw. Messkopf geschehen.

## Patentansprüche

1. Verfahren zum Prüfen von Reifen mittels eines Prüfsystems mit einem Speicher, in dem Geometriedaten (1, 2, 3, 4, 5, 6) des Reifens (7) gespeichert sind, und mindestens einem Messkopf (8) zur Prüfung der Oberfläche des Reifens (7), wobei der oder die Messköpfe (8) unter Berücksichtigung der Geometriedaten (1 - 6) des Reifens (7) zur Prüfung der Oberfläche des Reifens (7) positioniert werden,
**dadurch gekennzeichnet,**
**daß** die Geometriedaten des Reifens (7) den Innendurchmesser (4) der Lauffläche des Reifens (7) und/oder die Maulweite (5) des Reifens (7) umfassen.

2. Verfahren nach Anspruch 1, **dadurch gekennzeichnet, daß** die Geometriedaten des Reifens (7) den Außendurchmesser (1) und/oder den Innendurchmesser (2) und/oder die Breite (3) umfassen.

3. Verfahren nach einem der vorhergehenden Ansprüche, **dadurch gekennzeichnet, daß** die Geometriedaten (1 - 6) des Reifens (7) in einen Speicher eingegeben oder eingelesen werden.

4. Verfahren nach einem der vorhergehenden Ansprüche, **dadurch gekennzeichnet, daß** die Geometriedaten (1 - 6) des Reifens (7) gemessen werden.

5. Verfahren nach Anspruch 4, **dadurch gekennzeichnet, daß** die Geometriedaten (1 - 6) des Reifens durch einen Sensor (H, V, 16, 21) gemessen werden.

6. Verfahren nach Anspruch 5, **dadurch gekennzeichnet, daß** der Sensor relativ zum Reifen bewegbar ist.

7. Verfahren nach einem der Ansprüche 4 bis 6, **dadurch gekennzeichnet, daß** ein horizontales Profil des Reifens gemessen wird.

8. Verfahren nach einem der Ansprüche 4 bis 7, **dadurch gekennzeichnet, daß** ein vertikales Profil des Reifens gemessen wird.

9. Verfahren nach einem der vorhergehenden Ansprüche, **dadurch gekennzeichnet, daß** die Oberfläche des Reifens (7) interferometrisch geprüft wird.

10. Verfahren nach einem der vorhergehenden Ansprüche, **dadurch gekennzeichnet, daß** die Oberfläche des Reifens (7) durch Projizieren von strukturiertem Licht geprüft wird.

11. Verfahren nach einem der vorhergehenden Ansprüche, **dadurch gekennzeichnet, daß** die Oberfläche des Reifens (7) durch Photogrammetrie geprüft wird.

12. Verfahren nach einem der Ansprüche 5 oder 6, **dadurch gekennzeichnet, daß** die Oberfläche des Reifens durch denselben Sensor geprüft wird, durch den die Geometriedaten des Reifens gemessen werden.

13. Vorrichtung zum Prüfen von Reifen, insbesondere zur Durchführung des Verfahrens nach einem der vorhergehenden Ansprüche, mit einem Prüfsystem, das einen Speicher zum Speichern von Geometriedaten des Reifens (7) und mindestens einen Messkopf (8) zur Prüfung der Oberfläche des Reifens (7) umfaßt,
**dadurch gekennzeichnet,**
**daß** die Geometriedaten des Reifens (7) den Innendurchmesser (4) der Lauffläche des Reifens (7) und/oder die Maulweite (5) des Reifens (7) umfassen.

14. Vorrichtung nach Anspruch 13, **gekennzeichnet durch** eine Messeinrichtung zum Messen der Geometriedaten des Reifens.

15. Vorrichtung nach Anspruch 14, **dadurch gekennzeichnet, daß** die Messeinrichtung einen Sensor umfaßt.

16. Vorrichtung nach Anspruch 14 oder 15, **dadurch gekennzeichnet, daß** die Messeinrichtung und/oder der Sensor relativ zum Reifen bewegbar ist.

17. Vorrichtung nach einem der Ansprüche 13 bis 16, **dadurch gekennzeichnet, daß** das Prüfsystem einen interferometrischen Messkopf umfaßt.

18. Vorrichtung nach Anspruch 15, **dadurch gekennzeichnet, daß** der Sensor des Messkopfes derselbe Sensor ist wie der Sensor der Messeinrichtung.

## Claims

1. A method for testing tyres by means of a testing system having a memory in which geometric data (1, 2, 3, 4, 5, 6) of the tyre (7) are stored, and having at least one probe (8) for testing the surface of the tyre (7), wherein the probe or probes (8) are positioned for the testing of the tyre (7) surface while taking account of the geometric data (1-6) of the tyre (7),
**characterised in that**
the geometric data of the tyre (7) include the internal diameter (4) of the tread of the tyre (7) and/or the rim width (5) of the tyre (7).

2. A method in accordance with claim 1, **characterized in that** the geometric data of the tyre (7) include the external diameter (1) and/or the internal diameter (2) and/or the width (3).

3. A method in accordance with one of the preceding claims, **characterised in that** the geometric data (1 - 6) of the tyre (7) are input or read into a memory.

4. A method in accordance with any one of the preceding claims, **characterised in that** the geometric data (1 - 6) of the tyre (7) are measured.

5. A method in accordance with claim 4, **characterised in that** the geometric data (1 - 6) of the tyre are measured by a sensor (H, V, 16, 21).

6. A method in accordance with claim 5, **characterised in that** the sensor is movable relative to the tyre.

7. A method in accordance with one of the claims 4 to 6, **characterised in that** a horizontal profile of the tyre is measured.

8. A method in accordance with one of the claims 4 to 7, **characterised in that** a vertical profile of the tyre is measured.

9. A method in accordance with any one of the preceding claims, **characterised in that** the surface of the tyre (7) is tested interferometrically.

10. A method in accordance with any one of the preceding claims, **characterised in that** the surface of the tyre (7) is tested by projection of structured light.

11. A method in accordance with any one of the preceding claims, **characterised in that** the surface of the tyre (7) is tested by photogrammetry.

12. A method in accordance with one of the claims 5 or 6, **characterised in that** the surface of the tyre is tested by the same sensor by which the geometric data of the tyre are measured.

13. An apparatus for the testing of tyres, in particular for the carrying out of the method in accordance with any one of the preceding claims, having a testing system which includes a memory for the storing of geometric data of the tyre (7) and at least one probe (8) for the testing of the surface of the tyre (7),
**characterised in that**
the geometric data of the tyre (7) include the internal diameter (4) of the tread of the tyre (7) and/or the rim width (5) of the tyre (7).

14. An apparatus in accordance with claim 13, **characterised by** a measuring device for the measurement of the geometric data of the tyre.

15. An apparatus in accordance with claim 14, **characterised in that** the measuring device includes a sensor.

16. An apparatus in accordance with claim 14 or claim 15, **characterised in that** the measuring device and/or the sensor are movable relative to the tyre.

17. An apparatus in accordance with any one of the claims 13 to 16, **characterised in that** the testing system includes an interferometric probe.

18. An apparatus in accordance with claim 15, **characterised in that** the sensor of the probe is the same sensor as the sensor of the measuring device.

## Revendications

1. Procédé destiné à contrôler des pneus au moyen d'un système de contrôle, avec une mémoire, dans laquelle sont enregistrées des données géométriques (1, 2, 3, 4, 5, 6) du pneu (7), et avec au moins une tête manométrique (8) destinée au contrôle de la surface du pneu (7), la ou les têtes manométriques (8) étant positionnées en prenant en considération les données géométriques (1 - 6) du pneu (7) destinées au contrôle de la surface du pneu (7),
**caractérisé**
**en ce que** les données géométriques du pneu (7) comprennent le diamètre intérieur (4) de la chape du pneu (7) et/ou l'écartement (5) du pneu (7).

2. Procédé selon la revendication 1, **caractérisé en ce que** les données géométriques du pneu (7) comprennent le diamètre extérieur (1) et/ou le diamètre intérieur (2) et/ou la largeur (3).

3. Procédé selon une quelconque des revendications précédentes, **caractérisé en ce que** les données géométriques (1 - 6) du pneu (7) sont entrées ou lues dans une mémoire.

4. Procédé selon une quelconque des revendications précédentes, **caractérisé en ce que** les données géométriques (1 - 6) du pneu (7) sont mesurées.

5. Procédé selon la revendication 4, **caractérisé en ce que** les données géométriques (1 - 6) du pneu sont mesurées par un détecteur (H, V, 16, 21).

6. Procédé selon la revendication 5, **caractérisé en ce que** le détecteur est mobile par rapport au pneu.

7. Procédé selon une quelconque des revendications 4 à 6, **caractérisé en ce qu'**un profil horizontal du pneu est mesuré.

8. Procédé selon une quelconque des revendications 4 à 7, **caractérisé en ce qu'**un profil vertical du pneu est mesuré.

9. Procédé selon une quelconque des revendications précédentes, **caractérisé en ce que** la surface du pneu (7) est contrôlée interférométriquement.

10. Procédé selon une quelconque des revendications précédentes, **caractérisé en ce que** la surface du pneu (7) est contrôlée par projection de lumière structurée.

11. Procédé selon une quelconque des revendications précédentes, **caractérisé en ce que** la surface du pneu (7) est contrôlée par photogrammétrie.

12. Procédé selon une quelconque des revendications 5 ou 6, **caractérisé en ce que** la surface du pneu est contrôlée par le même détecteur par lequel les données géométriques du pneu sont mesurées.

13. Dispositif destiné à contrôler des pneus, notamment pour exécuter le procédé selon une quelconque des revendications précédentes, avec un système de contrôle, qui comprend une mémoire destinée à enregistrer des données géométriques du pneu (7) et au moins une tête manométrique (8) destinée à contrôler la surface du pneu (7)
**caractérisé**
**en ce que** les données géométriques du pneu (7) comprennent le diamètre intérieur (4) de la chape du pneu (7) et/ou l'écartement (5) du pneu (7).

14. Dispositif selon la revendication 13, **caractérisé par** un système de mesure destiné à mesurer les données géométriques du pneu.

15. Dispositif selon la revendication 14, **caractérisé en ce que** le système de mesure comprend un détecteur.

16. Dispositif selon la revendication 14 ou 15, **caractérisé en ce que** le système de mesure et/ou le détecteur est mobile par rapport au pneu.

17. Dispositif selon une quelconque des revendications 13 à 16, **caractérisé en ce que** le système de contrôle comprend une tête manométrique interférométrique.

18. Dispositif selon la revendication 15, **caractérisé en ce que** le détecteur de la tête manométrique est le même détecteur que le détecteur du système de mesure.
